(19) Europäisches Patentamt
European Patent Office
Office européen des brevets

(11) **EP 3 039 293 B1**

(12) **EUROPEAN PATENT SPECIFICATION**

(45) Date of publication and mention
of the grant of the patent:
**19.09.2018 Bulletin 2018/38**

(21) Application number: **14839823.3**

(22) Date of filing: **10.06.2014**

(51) Int Cl.:
*F04B 39/12* (2006.01)  *F04B 39/00* (2006.01)
*F04B 27/08* (2006.01)  *F04B 53/12* (2006.01)
*F16J 1/00* (2006.01)  *F16J 10/02* (2006.01)

(86) International application number:
**PCT/CN2014/079606**

(87) International publication number:
**WO 2015/027729 (05.03.2015 Gazette 2015/09)**

(54) **A FLUID CYLINDER**

FLÜSSIGKEITSZYLINDER

CYLINDRE DE FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2013 CN 201310385456
30.08.2013 CN 201320534101 U**

(43) Date of publication of application:
**06.07.2016 Bulletin 2016/27**

(73) Proprietor: **Dongguan Richtek Electronics Co.,
Ltd.
Dongguan, Guandong 523000 (CN)**

(72) Inventor: **YANG, Qi
Dongguan
Guangdong 523000 (CN)**

(74) Representative: **Office Kirkpatrick
Avenue Wolfers, 32
1310 La Hulpe (BE)**

(56) References cited:
**EP-A1- 1 437 508      EP-A2- 1 637 746
WO-A1-2011/106947      CN-A- 1 349 597
CN-A- 87 107 451      CN-A- 103 261 708
CN-A- 103 410 704      CN-U- 2 032 641
CN-U- 203 453 007      CN-Y- 2 216 135
CN-Y- 2 489 054      DE-A1-102008 031 848
FR-A1- 2 752 310      JP-A- 2001 271 744
JP-A- 2012 154 260**

**Description**

**FIELD OF THE INVENTION**

The present disclosure relates to a cylinder for fluid with fluid inlet means, in particular to a gas cylinder with gas inlet means.

**BACKGROUND OF THE INVENTION**

A conventional cylinder for fluid comprises means for allowing fluid to enter into the cylinder, which is normally a fluid inlet valve, in particular a unidirectional valve. The fluid outside the cylinder can enter into the cylinder through such an inlet valve but the fluid inside the cylinder cannot flow out of the cylinder through such an inlet valve. A second valve system needs to be arranged for fluid outlet.

Fluid cylinders have also been described with pistons, able to move both along the axial direction of a cylinder. A sealing element is arranged around the piston to ensure the tightness. In EP1437508, disclosing a compressor system, the sealing element and the piston are arranged to behave as a unidirectional valve. The fluid can enter into the compression chamber only when the piston is moved in a first axial direction. This configuration requires a complex design of the piston, associated with high manufacturing costs. In DE102008031848, a part of the cylinder is arranged with a conical shape, where the cross section diameter of the cylinder becomes wider than the cross section diameter of the piston to allow air to enter into the compression chamber. In some other cases, the piston is also able to move along a radial direction. For example, in FR2752310, the driving member of the piston is linked to a connecting rod, which when articulated induces first a movement of the piston in a first axial direction as well as towards a first radial side of the cylinder. This movement enables the fluid to enter into the cylinder. When the rod is articulated further, the piston is displaced along a second axial direction and also radially, back to its initial tight position. In JP2001271744 and WO 2011/106947, a similar system is described, where the connected rod is molded in one piece with the piston in a non-perpendicular manner.

With the systems above, as soon as the piston cross section is moved axially, it is also moved radially, and the tightness is lost. The length of the cylinder along which a piston can have a fluid compressing effect is therefore limited, unless complex sealing systems of sealing elements have been implemented, such as in and DE102008031848 .

There is therefore a need for fluid cylinders having pistons with a simple design to keep manufacture costs low while being able to maintain a tight seal along a significant portion of the cylinder when the piston is actioned.

**BRIEF SUMMARY OF THE INVENTION**

To solve the above-mentioned problems, a fluid cylinder with the features of claim 1 is suggested, namely a fluid cylinder which comprises a cylinder tube having a first tube end and a second tube end with respect to a tube axis of the cylinder tube and a tube cross section that is perpendicular to the tube axis, wherein the tube axis refers to the axis of the cylinder tube and the extension of the axis; an opening arranged at the first tube end for allowing fluid to enter into the cylinder tube; a piston having a piston cross section that is parallel with the tube cross section when the piston is not driven along any radial direction; a sealing member arranged on the piston and adapted to provide a fluid-tight sealing between the piston and an inner wall of the cylinder tube; and a driving member adapted to drive the piston to perform a piston motion in the cylinder tube along the tube axis, wherein the cylinder tube, the opening, the piston, the sealing member, the inner wall and the driving member are adapted, when the piston is driven to move in a first axial direction, to remove at least a part of the fluid-tight sealing for allowing fluid to enter into the cylinder tube through the opening, wherein the first axial direction is an axial direction from the second tube end towards the first tube end along the tube axis, wherein the driving member is adapted, upon driving the piston to move in the first axial direction (A1), to drive the piston (30) towards a first radial side (30r1) of the piston (30) in a first radial direction (R1) to remove at least a part of the fluid-tight sealing on a second radial side (30r2) of the piston (30) opposing to the first radial side (30r1) of the piston (30), wherein the first radial direction (R1) is a radial direction perpendicular to the tube axis (a), and

wherein the driving member (60) is adapted, upon driving the piston (30) to move in a second axial direction (A2) opposing to the first axial direction (A1), to drive the piston (30) towards the second radial side (30r2) of the piston (30) in a second radial direction (R2) opposing to the first radial direction (R1) and to maintain the fluid-tight sealing on the first radial side (30r1) and the second radial side (30r2) of the piston (30),

**wherein** at least a part of the sealing member (40) on the second radial side (30r2) of the piston (30) is arranged in an inclined piston cross section (30tc) inclining towards the first axial direction (A1) to form a first angle a with the piston cross section (30c), wherein the first angle a is in a reference plane (PL) that is along the first radial direction (A1) and perpendicular to the tube cross section (10c),

the driving member (60) is adapted, upon driving the piston (30) towards the first radial side (30r1) of the piston (30), to move the second radial side (30r2) of the piston (30) more in the first axial direction (A1) than the first radial side (30r1) of the piston (30) so that the piston cross section (30c) tilts towards the first axial direction (A1) to form a second angle $\beta1$ with the tube cross section (10c) in the reference plane (PL) and the inclined piston cross section (30tc) forms a third angle $\gamma1$ with the tube cross section (10c) in the reference plane (PL), wherein $\gamma1=\alpha+\beta1$, and

the driving member (60) is adapted, upon driving the piston (30) towards the second radial side (30r2) of the piston (30), to move the second radial side (30r2) of the piston (30) more in the second axial direction (R2) than the first radial side (30r1) of the piston (30) so that the piston cross section (30c) tilts towards the second axial direction (A2) to form a fourth angle $\beta2$ with the tube cross section (10c) in the reference plane (PL) and the inclined piston cross section (30tc) forms a fifth angle $\gamma2$ with the tube cross section (10c) in the reference plane (PL), wherein $\gamma2=\alpha-\beta2$.

## BRIEF INTRODUCTION OF THE DRAWINGS

The drawings are used merely for illustration purposes but not for limiting the scope of the protection.

Fig. 1 shows a schematic view of the fluid cylinder of a usual cylinder of the prior art.
Fig. 2a-2d show a configuration of the fluid cylinder of the invention.
Fig. 3 shows an alternative configuration of the invention.
Fig. 4 shows a further alternative configuration of the invention.
Fig. 5 shows a further alternative configuration of the invention.
Fig. 6a-6i show a further alternative configuration of the invention.
Fig. 7a-7b show further alternatives configuration of the invention.

## DETAILED DESCRIPTION

A conventional unidirectional fluid inlet valve for a cylinder can be designed to work with excellent unidirectional property, but with the costs of relative expensive components and large size.

A cheap and small-sized unidirectional fluid inlet valve is however not excellent in the unidirectional property. That is, the fluid may leak out of the cylinder through the fluid inlet valve.

The present invention provides a fluid cylinder with special fluid inlet means.

The fluid cylinder comprises a cylinder tube having a first tube end and a second tube end with respect to a tube axis of the cylinder tube, wherein the tube axis refers to the axis of the cylinder tube and the extension of the axis; an opening arranged at the first tube end for allowing fluid to enter into the cylinder tube; a piston; a sealing member arranged on the piston and adapted to provide a fluid-tight sealing between the piston and an inner wall of the cylinder tube; and a driving member adapted to drive the piston to perform a piston motion in the cylinder tube along the tube axis, wherein the cylinder tube, the opening, the piston, the sealing member, the inner wall and the driving member are adapted, when the piston is driven to move in a first axial direction, to remove at least a part of the fluid-tight sealing for allowing fluid to enter into the cylinder tube through the opening, wherein the first axial direction is an axial direction from the second tube end towards the first tube end along the tube axis.

To remove at least a part of the fluid-tight sealing for allowing fluid to enter into the cylinder tube through the opening:

the driving member is adapted, upon driving the piston to move in the first axial direction, to drive the piston towards a first radial side of the piston in a first radial direction to remove the fluid-tight sealing on a second radial side of the piston opposing to the first radial side of the piston, wherein the first radial direction is a radial direction perpendicular to the tube axis.

The driving member is adapted, upon driving the piston to move in a second axial direction opposing to the first axial direction, to drive the piston towards the second radial side of the piston in a second radial direction opposing to the first radial direction and to maintain the fluid-tight sealing on the first radial side and the second radial side of the piston.

The cylinder tube has a tube cross section that is perpendicular to the tube axis, the piston may have a piston cross section that is parallel with the tube cross section when the piston is not driven along any radial direction, at least a part of the sealing member on the second radial side of the piston is arranged in an inclined piston cross section inclining towards the first axial direction to form a first angle $\alpha$ with the piston cross section, wherein the first angle $\alpha$ is in a reference plane that is along the first radial direction and perpendicular to the tube cross section, the driving member is adapted, upon driving the piston towards the first radial side of the piston, to move the second radial side of the piston (30) more in the first axial direction than the first radial side of the piston so that the piston cross section tilts towards the first axial direction to form a second angle $\beta1$ with the tube cross section in the reference plane and the inclined piston cross section forms a third angle $\gamma1$ with the tube cross section in the reference plane, wherein $\gamma1=\alpha+\beta1$, and the driving member is adapted, upon driving the piston towards the second radial side of the piston, to move the second radial side of the piston more in the second axial direction than the first radial side of the piston so that the piston cross section tilts towards the second axial direction to form a fourth angle β2 with the tube cross section in the reference plane and the inclined piston cross section forms a fifth angle γ2 with the tube cross section in the reference plane, wherein γ2=α-β2.

The first angle a, a maximum of the second angle $\beta1_{max}$, and a maximum of the fourth angle $\beta2_{max}$ may be adapted to fulfil the following equations:

$$\gamma1_{max}=\alpha+\beta1_{max,} \tag{1}$$

$$|\gamma2|_{max}=\max(|\alpha-\beta2_{max}|,\ \alpha), \tag{2}$$

$$\beta_{max}=(\beta1_{max}+\beta2_{max})/2, \tag{3}$$

$$1.5\cdot\beta_{max}-x°\leq\gamma1_{max}\leq1.5\cdot\beta_{max}+x°, \tag{4}$$

$$0.5\cdot\beta_{max}-x°\leq|\gamma2|_{max}\leq0.5\cdot\beta_{max}+x°, \tag{5}$$

wherein x° is a first prescribed value which is a positive value being equal to or smaller than $0.5\cdot\beta_{max}$ and smaller than 5°, preferably smaller than 4°, more preferably smaller than 3°, in particular preferably smaller than 2°, more particular preferably smaller than 1°.

The maximum of the second angle $\beta1_{max}$ and the maximum of the fourth angle $\beta2_{max}$ may be adapted to fulfil

$$\beta_{max}=y°, \tag{6}$$

wherein y° is a second prescribed value being in a range of from 5° to 15°, preferably 7° to 13°, more preferably 9° to 11°, and further more preferably 9.4° to 10.6°.

The driving member may comprise a piston rod, the piston rod may comprise a first rod end coupled to the piston, the piston rod may extend from the first rod end in the first axial direction and terminate at a second rod end, the second rod end may be adapted to move along a closed orbit so as to drive the piston to fulfil equations (1) to (6), the closed orbit extending in both the axial direction and the radial direction, the closed orbit has a first outmost point in the first radial direction R1 in view of the tube axis and a second outmost point in the second radial direction in view of the tube axis, and the maximum of the second angle $\beta1_{max}$ is formed when the second rod end arrives at the first outmost point, while the maximum of the fourth angle $\beta2_{max}$ is formed when the second rod end arrives at the second outmost point.

The closed orbit may be located within the reference plane.

The driving member may comprise a rotatable member coupled to the second rod end, and the rotatable member may be adapted to rotate so as to move the second rod end along the closed orbit.

The rotatable member may be adapted to form the closed orbit in a circular shape.

The circle center of the closed orbit may be arranged on the tube axis, and the first angle $\alpha$ is larger than 0°.

The circle center of the closed orbit may be arranged to shift from the tube axis in the first radial direction.

The rotatable member may be a gear set driven by a motor, or the rotatable member may be a rotatable rod driven by a motor.

The rotable member may be adapted to form the closed orbit in a non-circular shape.

In the above embodiments, the second tube end may be a closed end and provided with a fluid outlet valve, wherein the fluid outlet valve may be a unidirectional valve for releasing fluid to the outside of the cylinder tube.

The fluid cylinder may be a gas cylinder and the fluid-tight sealing may be a gas-tight sealing.

The fluid cylinder may be a gas cylinder, the fluid-tight sealing may be a gas-tight sealing, and the fluid outlet valve may be a gas outlet valve.

The gas cylinder may be used in a gas compressor.

EMBODIMENTS

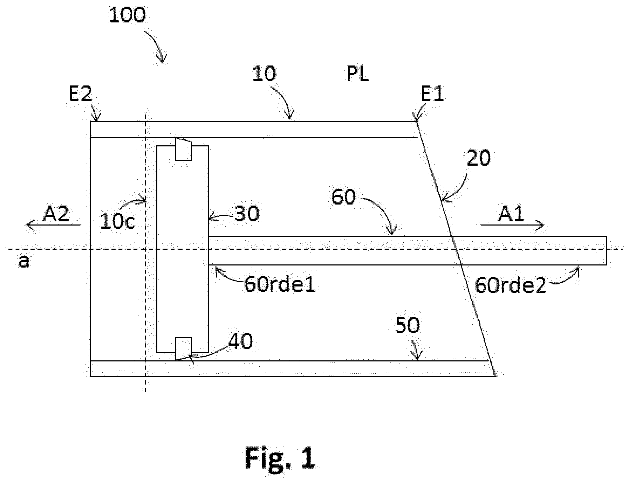

Fig. 1 shows a longitudinal section of a fluid cylinder 100 along the axis of a cylinder tube 10 of the fluid cylinder 100. The fluid cylinder 100 can be used for liquid such as water or for gas such as air.

The cylinder tube 10 is normally in a standard cylinder shape with a straight tube axis a and a tube cross section 10c perpendicular to the tube axis a being in a circular shape, wherein the tube axis a refers not only to the axis of the cylinder tube but also to the extension thereof.

However, the cylinder tube 10 is not limited to a standard cylinder shape, as long as all the functions of the fluid cylinder 100 of the present invention can be realized. For example, a tube cross section 10c of the cylinder tube 10 perpendicular to the tube axis a may also be in other shapes such as an ellipse, the cylinder tube 10 may be slightly curved along its tube axis a, and/or an end of the cylinder tube 10 may have an end face not parallel with the tube cross section 10c.

The longitudinal section of the fluid cylinder 100 as shown in Fig. 1 is located in a reference plane PL, which extends along the tube axis a and is perpendicular to the tube cross section 10c.

The cylinder tube 10 has a first tube end E1 and a second tube end E2. The first tube end E1 includes an opening 20 for allowing fluid to enter into the cylinder tube 10. The first tube end E1 may have an inclined flat cross section as shown in Fig. 1, but may also be in other shapes, such as a flat cross section perpendicular to the tube axis a, a curved shape, etc. Similarly, the second tube end E2 is also not limited to the shape shown in Fig. 1. The shapes of the first and second tube ends E1 and E2 can be any possible shapes as long as the functions of the fluid cylinder 100 of the present invention can be achieved.

The opening 20 may be a complete opening in view of the tube cross section 10c of the cylinder tube 10. However, the opening 20 may also be in any other shape as long as the functions of the fluid cylinder 100 of the present invention can be achieved.

The fluid cylinder 100 comprises a piston 30, which can be driven by a driving member 60 to perform a piston motion in the cylinder tube 10 in an axial direction along the tube axis a. The driving member 60 is not limited to the rod-shape as shown in Fig. 1. It can be any other shape, such as a curved rod. Further, the first rod end 60rde1 is not necessarily coupled to the radial center of the piston 30. The shape and the coupling position of the driving member 60 can be designed in various manners, as long as the functions of the fluid cylinder 100 of the present invention can be achieved.

A sealing member 40 is arranged on the piston 30 for providing fluid-tight sealing between the piston 30 and an inner wall 50 of the cylinder tube 10. The shape of the cross section of the sealing member 40 in Fig. 1 is in a trapezoid shape. However, the shape of this cross section is not limited thereto. It can be other shapes, such as a circle, an ellipse, a triangle, or any other proper shapes. The sealing member 40 is preferably arranged to be fitted into a groove around the piston 30, to increase the robustness of the fitting between the piston 30 and the sealing member 40.

The fluid-tight sealing does not refers to absolute sealing without any leakage, since it is not possible to realize absolute sealing. Instead, the fluid-tight sealing refers to a substantial sealing with respect to the fluid to be used in the fluid cylinder 100 and the purpose of the fluid cylinder 100. For example, when the fluid cylinder 100 is an air cylinder used in an air compressor, the fluid-tight sealing is an air-tight sealing which can guarantee to produce the air pressure required by the air compressor.

When the driving member 60 drives the piston 30 to move in a first axial direction A1 towards the first tube end E1, the fluid cylinder 100 is adapted to remove at least a part of the fluid-tight sealing provided by the sealing member 40, so that fluid can enter into the cylinder tube 10 through the opening 20.

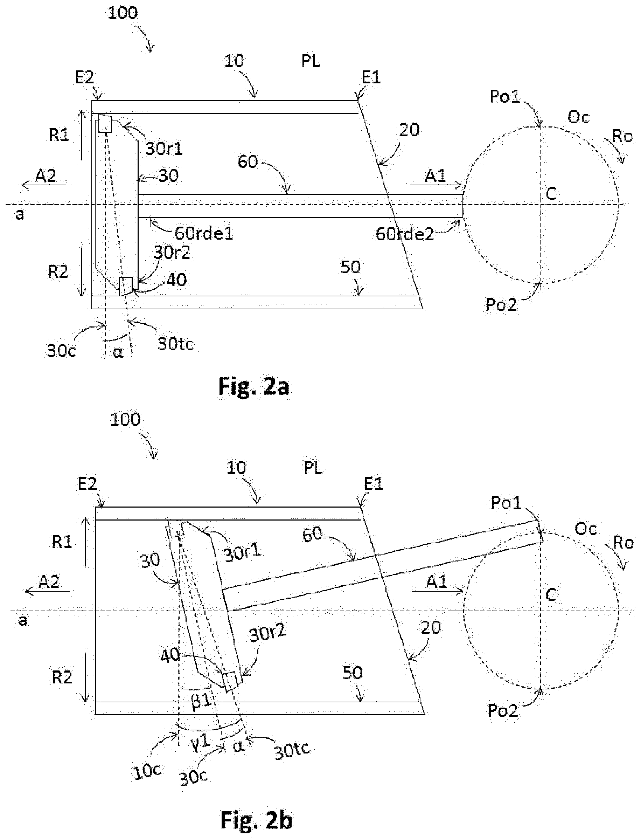

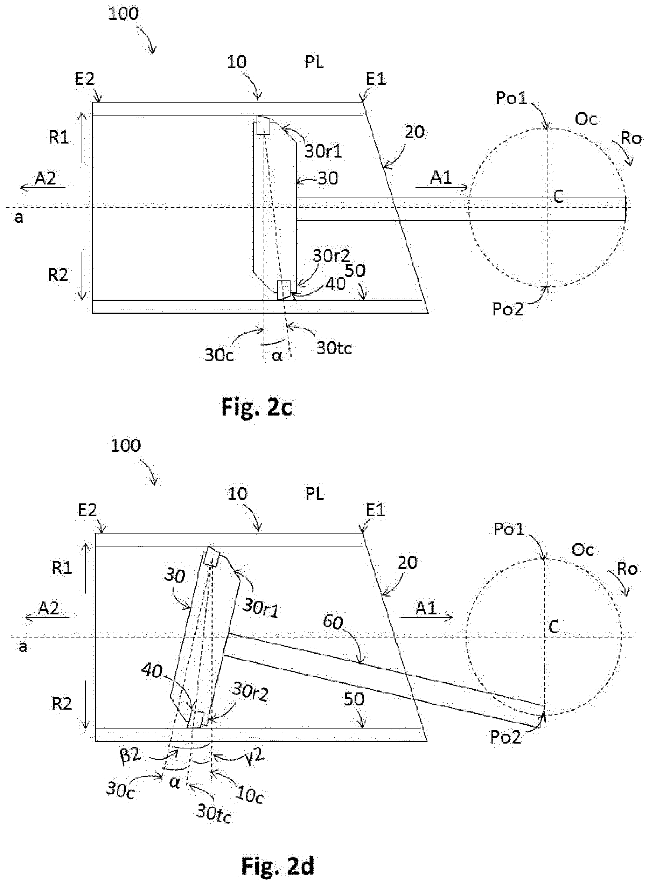

Figs. 2-7 show the embodiment for removing at least a part of the fluid-tight sealing.

The driving member 60 is adapted, upon driving the piston 30 to move in the first axial direction A1, to drive the piston 30 towards a first radial side 30r1 of the piston 30 in a first radial direction R1 in the reference plane PL, so that the fluid-tight sealing on a second radial side 30r2 of the piston 30 is removed for allowing fluid to enter into the cylinder tube 10.

Further, the driving member 60 is also adapted to, upon driving the piston 30 to move in the second axial direction A2, to drive the piston 30 towards the second radial side 30r2 along a second radial direction R2 in the reference plane PL, but the fluid-tight sealing on both the first and second radial sides 30r1, 30r2 is not removed. That is, the entire fluid-tight sealing is maintained and thus the fluid entered into the cylinder tube 10 is driven by the piston 30 towards the second axial direction A2.

As shown in Fig. 2a-2d, the piston 30 has a piston cross section 30c perpendicular to the tube axis a when the piston 30 is not driven by the driving member 60 in any radial direction perpendicular to the tube axis a. The sealing member 40 is formed in an inclined piston cross section 30tc of the piston 30, which forms with the piston cross section 30c a first angle $\alpha$ in the reference plane PL. The first angle $\alpha$ is normally larger than 0°, but can also be 0°, which means that the inclined piston cross section 30tc is not inclined but parallel with the piston cross section 30c. In a special case, the first angle $\alpha$ may even be of a negative value, which will be described later.

As shown in Fig. 2b, the driving member 60 is adapted, upon driving the piston 30 towards the first radial side 30r1 of the piston 30, to move the second radial side 30r2 of the piston 30 more in the first axial direction A1 than the first radial side 30r1 of the piston 30 so that the piston cross section 30c tilts towards the first axial direction A1 to form a second angle β1 with the tube cross section 10c in the reference plane PL and the inclined piston cross section 30tc forms a third angle γ1 with the tube cross section 10c in the reference plane PL, wherein γ1=α+β1.

The second angle β1 can be varied when the piston 30 is driven to move in the first axial direction A1.

On the other hand, as shown in Fig. 2d, the driving member 60 is adapted, upon driving the piston 30 towards the second radial side 30r2 of the piston 30, to move the second radial side 30r2 of the piston 30 more in the second axial direction R2 than the first radial side 30r1 of the piston 30 so that the piston cross section 30c tilts towards the second axial direction A2 to form a fourth angle β2 with the tube cross section 10c in the reference plane PL and the inclined piston cross section 30tc forms a fifth angle γ2 with the tube cross section 10c in the reference plane PL, wherein γ2=α-β2.

The fourth angle β2 can be varied when the piston 30 is driven to move in the second axial direction A2.

The fourth angle β2 and the first angle α can render the fifth angle γ2 to be of a positive value. The fourth angle β2 and the first angle α can also render the fifth angle γ2 to be of a negative value.

The first angel a, a maximum of the second angle $\beta 1_{max}$, and a maximum of the fourth angle $\beta 2_{max}$ are adapted to fulfil the following equations:

$$\gamma 1_{max}=\alpha+\beta 1_{max}, \tag{1}$$

$$|\gamma 2|_{max}=max(|\alpha-\beta 2_{max}|,\ \alpha), \tag{2}$$

$$\beta_{max}=(\beta 1_{max}+\beta 2_{max})/2, \tag{3}$$

$$1.5\cdot\beta_{max}-x°\leq\gamma 1_{max}\leq 1.5\cdot\beta_{max}+x°, \tag{4}$$

$$0.5\cdot\beta_{max}-x°\leq|\gamma 2|_{max}\leq 0.5\cdot\beta_{max}+x°, \tag{5}$$

wherein x° is a first prescribed value which is a positive value being equal to or smaller than $0.5\cdot\beta_{max}$ and smaller than 5°, preferably smaller than 4°, more preferably smaller than 3°, in particular preferably smaller than 2°, more particular preferably smaller than 1°.

With equations (1) to (5), $|\gamma 2|_{max}$ can be adjusted so that the fluid-tight sealing is substantially not removed at any sides of the piston 30 when the piston 30 is driven to move in the second axial direction A2, so as to push the fluid entered into the cylinder tube 10 in the second axial direction A2. At the same time, $\gamma 1_{max}$ is adjusted to be large enough for allowing enough fluid to enter into the cylinder tube 10 when the piston 30 is driven to move in the first axial direction A1. That is, equations (1) to (5) achieve a good balance between the amount of fluid that can enter into the cylinder tube 10 and the fluid-tight sealing for pushing the fluid in the cylinder tube 10.

The maximum of the second angle $\beta 1_{max}$ and the maximum of the fourth angle $\beta 2_{max}$ are adapted to fulfil

$$\beta_{max}=y°, \tag{6}$$

wherein y° is a second prescribed value. The second prescribed value y° is an empirical value for further improving the balance between the amount of fluid that can enter into the cylinder tube 10 and the fluid-tight sealing for pushing the fluid in the cylinder tube 10. The second prescribed value y° may be in a range of from 5° to 15°, preferably 7° to 13°, more preferably 9° to 11°, and further more preferably 9.4° to 10.6°.

The second prescribed value y° may also be slightly varied depending on the shape of the cross section of the sealing member 40, since the fluid-tight sealing provided by the sealing member 40 depends on the shape of the cross section of the sealing member 40 and the inclination angle of the sealing member 40 with respect to the inner wall 50 of the cylinder tube 10. Further, the second prescribed value y° may also be affected by the material of the sealing member 40, the hardness of the sealing member 40 and the pressure between the sealing member 40 and the inner wall 50 of the cylinder tube 10.

As shown in Figs. 2a-2d, the first radial side 30r1 and the second radial side 30r2 may be chamfered on the respective sides of the sealing member 40, to avoid collision between the piston 30 and the inner wall 50 of the cylinder tube 10, when the piston 30 is tilted by the driving member 60.

Further, it is not necessary that the entire sealing member is located in the inclined piston cross section 30tc.

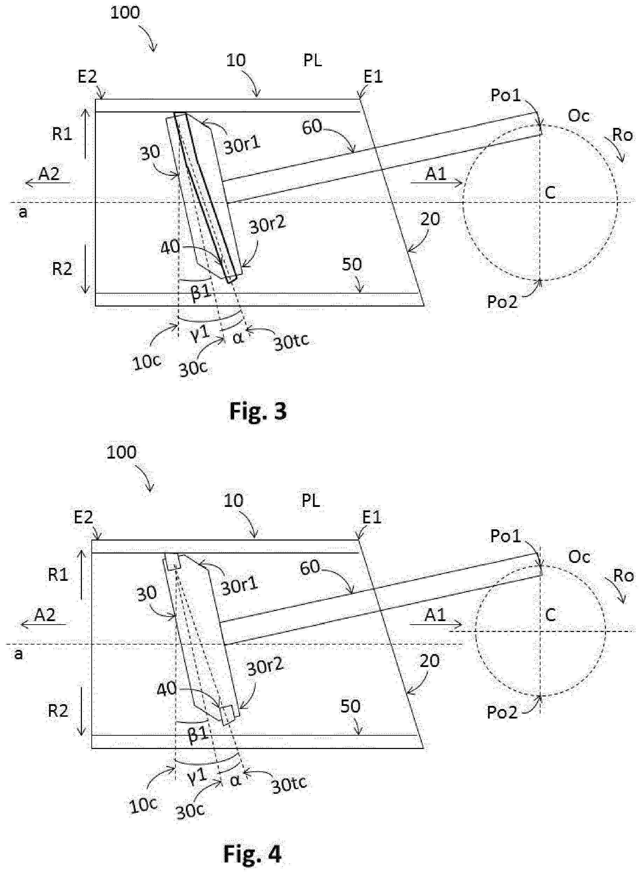

It is also feasible that only a part of sealing member is inclined, for example, as shown Fig. 3, by which the same function shown in Figs. 2a-2d can also be achieved.

As shown in Figs. 2a-2d, the driving member 60 may comprise a piston rod with a first rod end 60rde1 and a second rod end 60rde2. The first rod end 60rde1 is coupled to the piston 30. The second rod end 60rde2 is adapted to move along a closed orbit Oc. The closed orbit Oc extends in both the axial direction and the radial direction, so that the piston 30 is driven to move along the first and second axial directions A1, A2, to move the piston 30 towards the first and second radial direction R1, R2, and to tilt the piston 30.

The closed orbit (Oc) has a first outmost point Po1 in the first radial direction R1 in view of the tube axis a and a second outmost point Po2 in the second radial direction R2 in view of the tube axis a.

The maximum of the second angle $\beta1_{max}$ is formed when the second rod end 60rde2 arrives at the first outmost point (Po1), while the maximum of the fourth angle $\beta2_{max}$ is formed when the second rod end 60rde2 arrives at the second outmost point (Po2).

The closed orbit Oc may be located entirely within the reference plane PL.

The driving member 60 may comprises a rotatable member 60rm coupled to the second rod end 60rde2 of the piston rod 60rd and the rotatable member 60rm is adapted to rotate so as to move the second rod end 60rde2 along the closed orbit Oc, preferably only in the rotating direction Ro as shown in Figs. 2-7.

The closed orbit Oc is preferably in a circular shape as shown in Figs. 2-6.

The circle center C of the closed orbit Oc may be arranged on the tube axis a, as shown in Figs. 2-3 and 5-6. In this case, the first angle a should be larger than 0°, so that it is possible to fulfil the conditions defined by equations (1)-(6).

The circle center C of the closed orbit Oc may also be arranged to shift from the tube axis a in the first radial direction R1, as shown in Fig. 4. In this case, the maximum of the second angle $\beta1_{max}$ is larger than the maximum of the fourth angle $\beta2_{max}$. Thus, the first angle $\alpha$ may be reduced and even can be 0°, while the conditions defined by equations (1)-(6) can still be fulfilled. In a non-preferable but still feasible embodiment, the first angle $\alpha$ may even be of a negative value and equations (1)-(6) can still be fulfilled as long as the second angle $\beta1_{max}$ is enough larger than the maximum of the fourth angle $\beta2_{max}$.

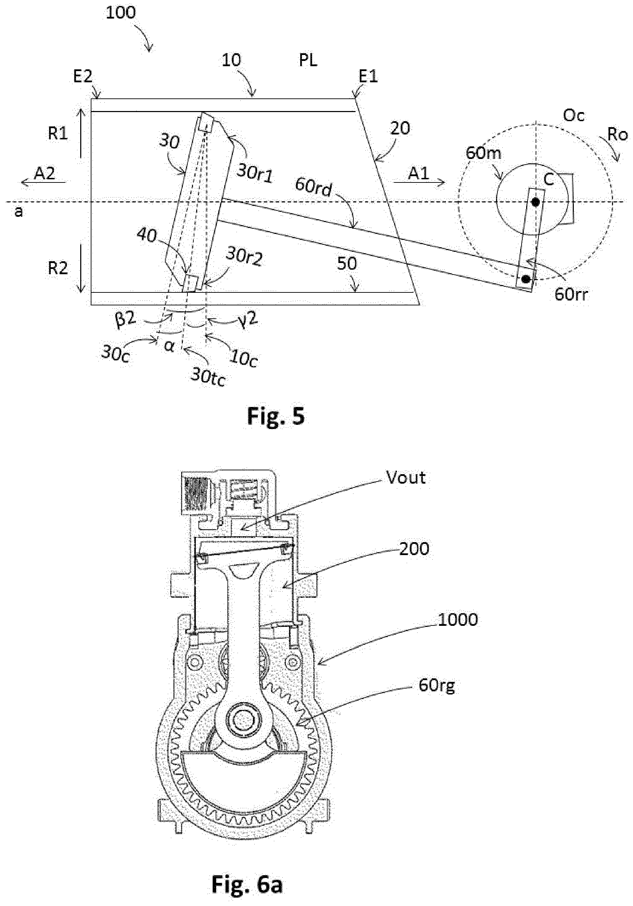

When the closed orbit Oc is in a circular shape, the rotatable member can be a rotatable rod 60rr driven by a motor 60m, as shown in Fig. 5. One end of the rotatable rod 60rr is coupled to the second rod end 60rde2 of the piston rod 60rd and the other end of the rotatable rod 60rr is arranged to be driven by the motor 60m at the circle center C. The rotatory shaft of the motor 60m can be directly coupled to the other end of the rotatable rod 60rr at the circle center C, and can also be coupled thereto through other means, such as a gear set, a gear-and-chain set, etc.

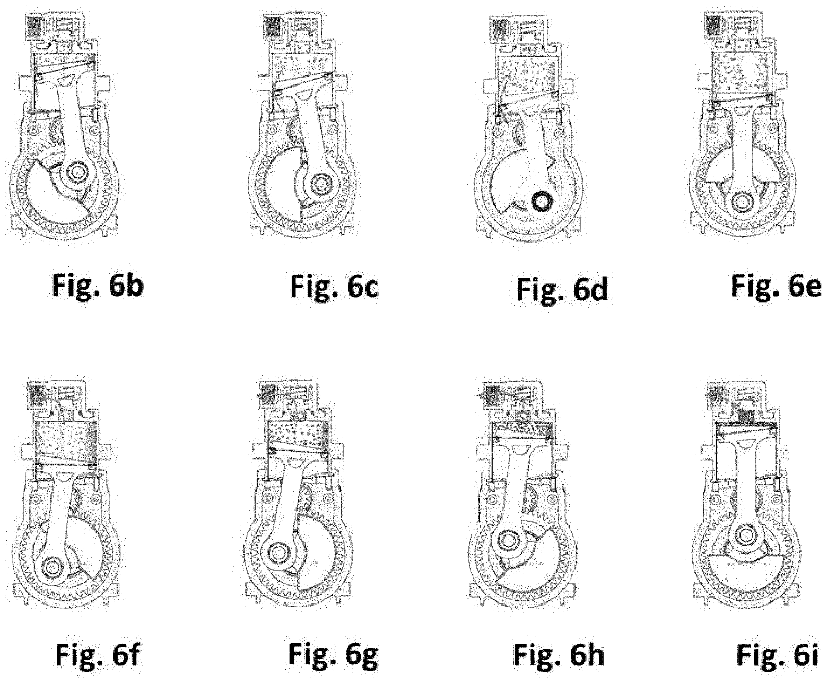

When the closed orbit Oc is in a circular shape, the rotatable member can also be a gear set 60rg driven by a motor 60m, as shown in Figs. 6a-6h. Figs. 6a-6h show a preferred embodiment with individual steps when the piston 30 is driven to remove the fluid-tight sealing for allowing fluid to enter, and to close the fluid-tight sealing for pushing the fluid in the second axial direction A2.

In particular, Figs. 6a-6i show that the fluid cylinder 100 may be a gas cylinder 200 used in a gas compressor 1000 with gas outlet valve Vout at the second tube end E2 for releasing gas out of the cylinder tube 10. In this case, the gas outside the gas cylinder 200 can enter into the cylinder tube 10 through gas inlet means by removing at least a part of the gas-tight sealing between the piston 30 and the inner wall 50 of the cylinder tube 10. Then, the gas is pushed and compressed by the piston 30 so as to flow out of the cylinder tube 10 through the gas outlet valve Vout then into for example a compressed gas storage container or a tire of a vehicle which uses compressed gas such as air.

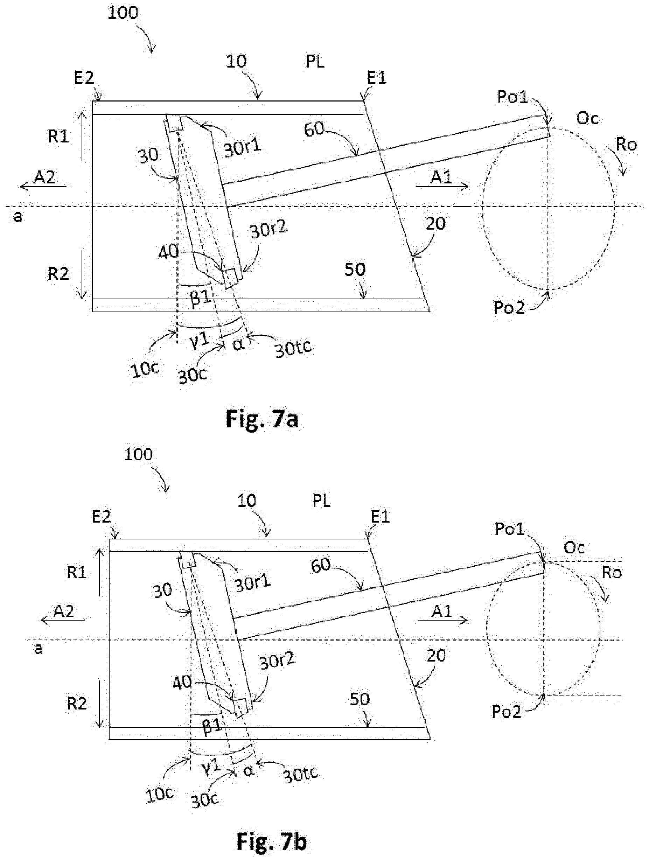

The closed orbit Oc may also be in other shapes realized by any proper mechanical rotating means which can produce non-circular closed rotating orbit. For example, Fig. 7a and 7b show elliptical closed orbits.

The elliptical closed orbit Oc in Fig. 7a is symmetric with respect to the tube axis a, and in this case it is required that the first angle $\alpha$ is larger than 0°, so that it is possible to fulfil the conditions defined by equations (1)-(6). The elliptical closed orbit Oc in Fig. 7a has a longer axis in the radial direction than the axis in the axial direction, which can shorten the moving distance of the piston 30 in the axial direction. In contrast, it is also possible to use an elliptical closed orbit with a longer axis in the axial direction to enlarge the moving distance of the piston 30 in the axial direction, depending on the need of the fluid-cylinder.

In Fig. 7b, the elliptical closed orbit is shifted in the first radial direction R1, which is similar to the situation shown in Fig. 4. In this case, the first angle $\alpha$ may be reduced, or even may be equal to or smaller than 0°, as long as the conditions defined in equations (1)-(6) can be fulfilled.

The above description is only the preferred embodiment of the present disclosure and is not intended to limit the scope of the protection. Any modification, equivalent substitution and improvement made within the principle of the present disclosure as defined in the appended claims should be covered by the protection scope of the invention.

**Claims**

1. A fluid cylinder (100), comprising:

   a cylinder tube (10) having a first tube end (E1) and a second tube end (E2) with respect to a tube axis (a) of the cylinder tube (10) and a tube cross section (10c) that is perpendicular to the tube axis (a) wherein the tube axis (a) refers to the axis of the cylinder tube (10) and the extension of the axis; an opening (20) arranged at the first tube end (E1) for allowing fluid to enter into the cylinder tube (10);
   a piston (30) having a piston cross section (30c) that is parallel with the tube cross section (10c) when the piston (30) is not driven along any radial direction,
   a sealing member (40) arranged on the piston (30) and adapted to provide a fluid-tight sealing between the piston (30) and an inner wall (50) of the cylinder tube (10); and
   a driving member (60) adapted to drive the piston (30) to perform a piston motion in the cylinder tube (10) along the tube axis (a),
   wherein the cylinder tube (10), the opening (20), the piston (30), the sealing member (40), the inner wall (50) and the driving member (60) are adapted, when the piston (30) is driven to move in a first axial direction (A1), to remove at least a part of the fluid-tight sealing for allowing fluid to enter into the cylinder tube (10) through the opening (20), wherein the first axial direction (A1) is an axial direction from the second tube end (E2) towards the first tube end (E1) along the tube axis (a),
   wherein the driving member (60) is adapted, upon driving the piston (30) to move in the first axial direction (A1), to drive the piston (30) towards a first radial side (30r1) of the piston (30) in a first radial direction (R1) to remove at least a part of the fluid-tight sealing on a second radial side (30r2) of the piston (30) opposing to the first radial side (30r1) of the piston (30), wherein the first radial direction (R1) is a radial direction perpendicular to the tube axis (a), and
   wherein the driving member (60) is adapted, upon driving the piston (30) to move in a second axial direction (A2) opposing to the first axial direction (A1), to drive the piston (30) towards the second radial side (30r2) of the piston (30) in a second radial direction (R2) opposing to the first radial direction (R1) and to maintain the fluid-tight sealing on the first radial side (30r1) and the second radial side (30r2) of the piston (30), **characterized in that**
   at least a part of the sealing member (40) on the second radial side (30r2) of the piston (30) is arranged in an inclined piston cross section (30tc) inclining towards the first axial direction (A1) to form a first angle $\alpha$ with the piston cross section (30c), wherein the first angle $\alpha$ is in a reference plane (PL) that is along the first radial direction (A1) and perpendicular to the tube cross section (10c),
   the driving member (60) is adapted, upon driving the piston (30) towards the first radial side (30r1) of the piston (30), to move the second radial side (30r2) of the piston (30) more in the first axial direction (A1) than the first radial side (30r1) of the piston (30) so that the piston cross section (30c) tilts towards the first axial direction (A1) to form a second angle $\beta1$ with the tube cross section (10c) in the reference plane (PL) and the inclined piston cross section (30tc) forms a third angle $\gamma1$ with the tube cross section (10c) in the reference plane (PL), wherein $\gamma1 = \alpha + \beta1$, and
   the driving member (60) is adapted, upon driving the piston (30) towards the second radial side (30r2) of the piston (30), to move the second radial side (30r2) of the piston (30) more in the second axial direction (R2) than the first radial side (30r1) of the piston (30) so that the piston cross section (30c) tilts towards the second axial direction (A2) to form a fourth angle $\beta2$ with the tube cross section (10c) in the reference plane (PL) and the inclined piston cross section (30tc) forms a fifth angle $\gamma2$ with the tube cross section (10c) in the reference plane (PL), wherein $\gamma2 = \alpha - \beta2$.

2. The fluid cylinder (100) of claim 1, wherein
   the first angel a, a maximum of the second angle $\beta1_{max}$, and a maximum of the fourth angle $\beta2_{max}$ are adapted to fulfil the following equations:

$$\gamma1_{max} = \alpha + \beta1_{max}, \qquad\qquad (1)$$

$$|\gamma2|_{max} = \max(|\alpha - \beta2_{max}|, \alpha), \qquad\qquad (2)$$

$$\beta_{max} = (\beta1_{max} + \beta2_{max})/2, \qquad\qquad (3)$$

$$1.5 \cdot \beta_{max} - x° \leq \gamma 1_{max} \leq 1.5 \cdot \beta_{max} + x°, \qquad (4)$$

$$0.5 \cdot \beta_{max} - x° \leq |\gamma 2|_{max} \leq 0.5 \cdot \beta_{max} + x°, \qquad (5)$$

wherein x° is a first prescribed value which is a positive value being equal to or smaller than $0.5 \cdot \beta_{max}$ and smaller than 5°.

3. The fluid cylinder (100) of claim 2, wherein
the maximum of the second angle $\beta 1_{max}$ and the maximum of the fourth angle $\beta 2_{max}$ are adapted to fulfil

$$\beta_{max} = y°, \qquad (6)$$

wherein y° is a second prescribed value being in a range of from 5° to 15.

4. The fluid cylinder (100) of claim 3, wherein
the driving member (60) comprises a piston rod (60rd),
the piston rod (60rd) comprises a first rod end (60rde1) coupled to the piston (30),
the piston rod (60rd) extends from the first rod end (60rde1) in the first axial direction (A1) and terminates at a second rod end (60rde2),
the second rod end (60rde2) is adapted to move along a closed orbit (Oc) so as to drive the piston (30) to fulfil equations (1) to (6), the closed orbit (Oc) extending in both the axial direction and the radial direction, the closed orbit (Oc) being located within the reference plan (PL),
the closed orbit (Oc) has a first outmost point (Po1) in the first radial direction R1 in view of the tube axis (a) and a second outmost point (Po2) in the second radial direction (R2) in view of the tube axis (a), and
the maximum of the second angle $\beta 1_{max}$ is formed when the second rod end (60rde2) arrives at the first outmost point (Po1), while the maximum of the fourth angle $\beta 2_{max}$ is formed when the second rod end (60rde2) arrives at the second outmost point (Po2).

5. The fluid cylinder (100) of claim 4, wherein
the driving member (60) comprises a rotatable member coupled to the second rod end (60rde2), and
the rotatable member is adapted to rotate so as to move the second rod end (60rde2) along the closed orbit (Oc).

6. The fluid cylinder (100) of claim 5, wherein
a circle center (C) of the closed orbit (Oc) is arranged on the tube axis (a), and
the first angle $\alpha$ is larger than 0°.

7. The fluid cylinder (100) of claim 5, wherein
the circle center (C) of the closed orbit (Oc) is arranged to shift from the tube axis (a) in the first radial direction (R1).

8. The fluid cylinder (100) of anyone of claims 5 to 7, wherein
the rotatable member is a gear set (60rg) driven by a motor (60m), or the rotatable member is a rotatable rod (60rr) driven by a motor (60m).

9. The fluid cylinder of claim 4, wherein
the rotable member is adapted to form the closed orbit (Oc) in a non-circular shape.

10. The fluid cylinder (100) of anyone of preceeding claims, wherein
the second tube end (E2) is a closed end and provided with a fluid outlet valve (Vout), wherein the fluid outlet valve (Vout) is a unidirectional valve for releasing fluid to the outside of the cylinder tube (10).

11. The fluid cylinder (100) of anyone of claims 1 to 10, wherein
the fluid cylinder (100) is a gas cylinder (200) and the fluid-tight sealing is a gas-tight sealing.

12. The fluid cylinder (100) of claim 11, wherein
the fluid cylinder (100) is a gas cylinder (200), the fluid-tight sealing is a gas-tight sealing, and the fluid outlet valve (Vout) is a gas outlet valve.

13. A gas compressor (1000), comprising the gas cylinder (200) of claim 12.

**Patentansprüche**

1. Flüssigkeitszylinder (100), der umfasst:

ein Zylinderrohr (10) mit einem ersten Rohrende (E1) und einem zweiten Rohrende (E2) bezüglich einer Rohrachse (a) des Zylinderrohrs (10) und einen Rohrquerschnitt (10c), der rechtwinklig zu der Rohrachse (a) ist, wobei die Rohrachse (a) sich auf die Achse des Zylinderrohrs (10) und die Erstreckung der Achse bezieht; eine Öffnung (20), die an dem ersten Rohrende (E1) angeordnet ist, um zu ermöglichen, dass die Flüssigkeit in das Zylinderrohr (10) eintritt;
einen Kolben (30) mit einem Kolbenquerschnitt (30c), der parallel zu dem Rohrquerschnitt (10c) ist, wenn der Kolben (30) nicht entlang einer radialen Richtung angetrieben wird,
ein Dichtungselement (40), das an dem Kolben (30) angeordnet ist und dazu ausgebildet ist, eine flüssigkeitsdichte Dichtung zwischen dem Kolben (30) und einer Innenwand (50) des Zylinderrohrs (10) zu schaffen; und
ein Antriebselement (60), das dazu ausgebildet ist, den Kolben (30) anzutreiben, um eine Kolbenbewegung in dem Zylinderrohr (10) entlang der Rohrachse (a) auszuführen,
wobei das Zylinderrohr (10), die Öffnung (20), der Kolben (30), das Dichtungselement (40), die Innenwand (50) und das Antriebselement (60) dazu ausgebildet sind, wenn der Kolben (30) so angetrieben wird, dass er sich in eine erste axiale Richtung (A1) bewegt, mindestens einen Teil der flüssigkeitsdichten Dichtung zu entfernen, um zu ermöglichen, dass Flüssigkeit in das Zylinderrohr (10) durch die Öffnung (20) eintritt, wobei die erste axiale Richtung (A1) eine axiale Richtung von dem zweiten Rohrende (E2) zu dem ersten Rohrende (E1) entlang der Rohrachse (a) ist,
wobei das Antriebselement (60) dazu ausgebildet ist, auf ein derartiges Antreiben des Kolbens (30), dass er sich in die erste axiale Richtung (A1) bewegt, hin den Kolben (30) zu einer ersten radialen Seite (30r1) des Kolbens (30) in eine erste radiale Richtung (R1) zu treiben, um mindestens einen Teil der flüssigkeitsdichten Dichtung an einer zweiten radialen Seite (30r2) des Kolbens (30) zu entfernen, die der ersten radialen Seite (30r1) des Kolbens (30) gegenüber liegt, wobei die erste radiale Richtung (R1) eine radiale Richtung rechtwinklig zu der Rohrachse (a) ist, und
wobei das Antriebselement (60) dazu ausgebildet ist, den Kolben (30) so anzutreiben, dass er sich in eine zweite axiale Richtung (A2) bewegt, die der ersten axialen Richtung (A1) entgegengesetzt ist, um den Kolben (30) zu der zweiten radialen Seite (30r2) des Kolbens (30) in eine zweite radiale Richtung (R2) zu treiben, die der ersten radialen Richtung (R1) entgegengesetzt ist, und die flüssigkeitsdichte Dichtung an der ersten radialen Seite (30r1) und der zweiten radialen Seite (30r2) zu erhalten, **dadurch gekennzeichnet, dass**
mindestens ein Teil des Dichtungselements (40) an der zweiten radialen Seite (30r2) des Kolbens (30) in einem geneigten Kolbenquerschnitt (30tc) angeordnet ist, der zu der ersten axialen Richtung (A1) hin geneigt ist, um einen ersten Winkel $\alpha$ mit dem Kolbenquerschnitt (30c) zu bilden, wobei sich der erste Winkel $\alpha$ in einer Bezugsebene (PL) befindet, die sich entlang der ersten radialen Richtung (A1) und rechtwinklig zu dem Kolbenquerschnitt (10c) erstreckt,
wobei das Antriebselement (60) dazu ausgebildet ist, auf Treiben des Kolbens (30) zu der ersten radialen Seite (30r1) des Kolbens (30) hin die zweite radiale Seite (30r2) des Kolbens (30) mehr in die erste axiale Richtung (A1) zu bewegen als die erste radiale Seite (30r1) des Kolbens (30), so dass der Kolbenquerschnitt (30c) sich zu der ersten axialen Richtung (A1) hin neigt, um einen zweiten Winkel $\beta1$ mit dem Rohrquerschnitt (10c) in der Bezugsebene (PL) zu bilden, und der geneigte Kolbenquerschnitt (30tc) einen dritten Winkel $\gamma1$ mit dem Rohrquerschnitt (10c) in der Bezugsebene (PL) bildet, wobei $\gamma1=\alpha+\beta1$ und
wobei das Antriebselement (60) dazu ausgebildet ist, auf Treiben des Kolbens (30) zu der zweiten radialen Seite (30r2) des Kolbens (30) hin die zweite radiale Seite (30r2) des Kolbens (30) mehr in die zweite axiale Richtung (R2) zu bewegen als die erste radiale Seite (30r1) des Kolbens (30), so dass der Kolbenquerschnitt (30c) sich zu der zweiten axialen Richtung (A2) hin neigt, um einen vierten Winkel $\beta2$ mit dem Rohrquerschnitt (10c) in der Bezugsebene (PL) zu bilden, und der geneigte Kolbenquerschnitt (30tc) einen fünften Winkel $\gamma2$ mit dem Rohrquerschnitt (10c) in der Bezugsebene (PL) bildet, wobei $\gamma2=\alpha-\beta2$.

2. Flüssigkeitszylinder (100) nach Anspruch 1, wobei
der erste Winkel $\alpha$, ein Höchstwert des zweiten Winkels $\beta1_{max}$ und ein Höchstwert des vierten Winkels $\beta2_{max}$ dazu ausgebildet sind, die folgenden Gleichungen zu erfüllen:

$$\gamma1_{max}=\alpha+\beta1_{max}, \tag{1}$$

$$|\gamma2|_{max}=max(|\alpha-\beta2_{max}|, \alpha), \tag{2}$$

$$\beta_{max}=(\beta1_{max}+\beta2_{max})/2, \tag{3}$$

$$1.5\cdot\beta_{max}-x°\leq\gamma1_{max}\leq1.5\cdot\beta_{max}+x°, \tag{4}$$

$$0.5\cdot\beta_{max}-x°\leq|\gamma2|_{max}\leq0.5\cdot\beta_{max}+x°, \tag{5}$$

wobei x° ein erster vorgeschriebener Wert ist, der ein positiver Wert ist, der gleich oder kleiner $0{,}5\cdot\beta_{max}$ und kleiner als 5° ist.

**3.** Flüssigkeitszylinder (100) nach Anspruch 2, wobei
der Höchstwert des zweiten Winkels $\beta1_{max}$ und der Höchstwert des vierten Winkels $\beta2_{max}$ dazu ausgebildet sind,

$$\beta_{max} = \gamma°$$

zu erfüllen, wobei γ° ein zweiter vorgeschriebener Wert ist, der sich in einem Bereich von 5° bis 15 befindet.

**4.** Flüssigkeitszylinder (100) nach Anspruch 3, wobei
das Antriebselement (60) eine Kolbenstange (60rd) umfasst,
wobei die Kolbenstange (60rd) ein mit dem Kolben (30) gekoppeltes erstes Stangenende (60rde1) umfasst,
wobei sich die Kolbenstange (60rd) von dem ersten Stangenende (60rde1) in die erste axiale Richtung (A1) erstreckt und an einem zweiten Stangenende (60rde2) endet,
wobei das zweite Stangenende (60rde2) dazu ausgebildet ist, sich entlang einer geschlossenen Umlaufbahn (Oc) zu bewegen, um den Kolben (30) so zu treiben, dass Gleichungen (1) bis (6) erfüllt sind, wobei sich die geschlossene Umlaufbahn (Oc) sowohl in die axiale Richtung als auch in die radiale Richtung erstreckt, wobei die geschlossene Umlaufbahn (Oc) sich in der Bezugsebene (PL) befindet,
wobei die geschlossene Umlaufbahn (Oc) einen ersten äußersten Punkt (Po1) in der ersten radialen Richtung (R1) bezüglich der Rohrachse (a) hat und einen zweiten äußersten Punkt (Po2) in der zweiten radialen Richtung (R2) bezüglich der Rohrachse (a) hat, und
wobei der Höchstwert des zweiten Winkels $\beta1_{max}$ gebildet wird, wenn das zweite Stangenende (60rde2) an dem ersten äußersten Punkt (Po1) ankommt, während der Höchstwert des vierten Winkels $\beta2_{max}$ gebildet wird, wenn das zweite Stangenende (60rde2) an dem zweiten äußersten Punkt (Po2) ankommt.

**5.** Flüssigkeitszylinder (100) nach Anspruch 4, wobei
das Antriebselement (60) ein mit dem zweiten Stangenende (60rde2) gekoppeltes drehbares Element umfasst und das drehbare Element dazu ausgebildet ist, sich so zu drehen, dass sich das zweite Stangenende (60rde2) entlang der geschlossenen Umlaufbahn (Oc) bewegt.

**6.** Flüssigkeitszylinder (100) nach Anspruch 5, wobei
eine Kreismitte (C) der geschlossenen Umlaufbahn (Oc) an der Rohrachse (a) angeordnet ist, und
der erste Winkel α größer als 0° ist.

**7.** Flüssigkeitszylinder (100) nach Anspruch 5, wobei
die Kreismitte (C) der geschlossenen Umlaufbahn (Oc) so angeordnet ist, dass sie sich von der Rohrachse (a) in die erste radiale Richtung (R1) verlagert.

**8.** Flüssigkeitszylinder (100) nach einem der Ansprüche 5 bis 7, wobei
das drehbare Element ein Zahnradsatz (60rg) ist, der von einem Motor (60m) angetrieben wird, oder das drehbare Element eine drehbare Stange (60rr) ist, die von einem Motor (60m) angetrieben wird.

**9.** Flüssigkeitszylinder (100) nach Anspruch 4, wobei
das drehbare Element dazu ausgebildet ist, die geschlossene Umlaufbahn (Oc) in einer nicht-kreisförmigen Form zu bilden.

**10.** Flüssigkeitszylinder (100) nach einem der vorhergehenden Ansprüche, wobei
das zweite Stangenende (60rde2) ein geschlossenes Ende ist und ein Flüssigkeitsauslassventil (Vout) umfasst, wobei das Flüssigkeitsauslassventil (Vout) ein unidirektionales Ventil zum Ausgeben von Flüssigkeit aus dem Zylinderrohr (10) heraus ist.

**11.** Flüssigkeitszylinder (100) nach einem der Ansprüche 1 bis 10, wobei
der Flüssigkeitszylinder (100) ein Gaszylinder (200) ist und die flüssigkeitsdichte Dichtung eine gasdichte Dichtung ist.

**12.** Flüssigkeitszylinder (100) nach Anspruch 11, wobei
der Flüssigkeitszylinder (100) ein Gaszylinder (200) ist, die flüssigkeitsdichte Dichtung eine gasdichte Dichtung ist und das Flüssigkeitsauslassventil (Vout) ein Gasauslassventil ist.

**13.** Gaskompressor (1000), der den Gaszylinder (200) nach Anspruch 12 umfasst.

## Revendications

**1.** Cylindre pour fluide (100) comprenant :

un tube cylindrique (10) comportant une première extrémité de tube (E1) et une seconde extrémité de tube (E2) par rapport à un axe de tube (a) du tube cylindrique (10) et une section transversale de tube (10c) perpendiculaire à l'axe de tube (a), l'axe de tube (a) se référant à l'axe du tube cylindrique (10) et à l'extension du tube ; une ouverture (20) étant arrangée à la première extrémité de tube (E1) pour permettre au fluide d'entrer dans le tube cylindrique (10) ;
un piston (30) comportant une section transversale de piston (30c) parallèle à la section transversale de tube (10c) quand le piston (30) n'est pas entraîné selon une direction radiale,
un joint étanche (40) disposé sur le piston (30) et adapté pour fournir un scellement étanche aux fluides entre le piston (30) et une paroi interne (50) du tube cylindrique (10) ; et
un organe d'entraînement (60) adapté pour entraîner le piston (30) afin d'effectuer un mouvement du piston dans le tube cylindrique (10) le long de l'axe du tube (a),
dans lequel le tube cylindrique (10), l'ouverture (20), le piston (30), le joint étanche (40), la paroi interne (50) et l'organe d'entraînement (60) sont adaptés, quand le piston (30) est entraîné pour se déplacer dans une première direction axiale (A1), pour enlever au moins une partie du scellement étanche afin de permettre au fluide d'entrer dans le tube cylindrique (10) à travers l'ouverture (20), la première direction axiale (A1) étant une direction axiale depuis la seconde extrémité de tube (E2) vers la première extrémité de tube (E1) le long de l'axe de tube (a),
dans lequel l'organe d'entraînement (60) est adapté, quand on entraîne le piston (30), pour se déplacer dans la première direction axiale (A1), pour entraîner le piston (30) vers un premier côté radial (30r1) du piston (30) dans une première direction radiale (R1) pour enlever au moins une partie du scellement étanche sur un deuxième côté radial (30r2) du piston (30) à l'opposé du premier côté radial (30r1) du piston (30), la première direction radiale (R1) étant une direction radiale perpendiculaire à l'axe de tube (a), et
dans lequel l'organe d'entraînement (60) est adapté, quand on entraîne le piston (30), pour se déplacer dans une deuxième direction radiale (A2) opposée à la première direction radiale (A1), pour entraîner le piston (30) vers un deuxième côté radial (30r2) du piston (30) dans une deuxième direction radiale (R2) opposée à la première direction radiale (R1) et pour maintenir le joint étanche sur le premier côté radial (30r1) et le deuxième côté radial (30r2) du piston (30),
**caractérisé en ce que**
au moins une partie du joint (40) sur le deuxième côté radial (30r2) du piston (30) est disposé dans une section transversale inclinée du piston (30tc), inclinée vers la première direction axiale (A1), pour former un premier angle α avec la section transversale de piston (30c), le premier angle α se trouvant dans un plan de référence (PL) qui se situe le long de la première direction axiale (A1) et perpendiculaire à la section transversale de tube (10c),
l'organe d'entraînement (60) est adapté, quand on entraîne le piston (30) vers le premier côté radial (30r1) du piston (30), pour déplacer le deuxième côté radial (30r2) du piston (30) davantage dans la première direction axiale (A1) que le premier côté radial (30r1) du piston (30), pour que la section transversale de piston (30c) s'incline vers la première direction axiale (A1) pour former un deuxième angle β1 avec la section transversale de tube (10c) dans le plan de référence (PL), avec γ1 = α + β1, et

l'organe d'entraînement (60) est adapté, quand on entraîne le piston (30) vers le deuxième côté radial (30r2) du piston (30), pour déplacer le deuxième côté radial (30r2) du piston (30) davantage dans la deuxième direction axiale (R2) que le premier côté radial (30r1) du piston (30), pour que la section transversale de piston (30c) s'incline vers la deuxième direction axiale (A2) pour former un quatrième angle β2 avec la section transversale de tube (10c) dans le plan de référence (PL) et pour que la section transversale inclinée du piston (30tc) forme un cinquième angle γ2 avec la section transversale de tube (10c) dans le plan de référence (PL), avec γ2 = α + β2.

2. Cylindre pour fluide (100) selon la revendication 1, dans lequel :

le premier angle α, un maximum du deuxième angle $β1_{max}$, et un maximum du quatrième angle $β2_{max}$, sont adaptés pour satisfaire les équations suivantes :

$$γ1_{max} = α + β1_{max} \qquad\qquad (1)$$

$$|γ2|_{max} = max\ (|α - β2_{max}|, α) \qquad\qquad (2)$$

$$β_{max} = (β1_{max} + β2_{max})/2 \qquad\qquad (3)$$

$$1,5\ β_{max} - x° ≤ γ1_{max} ≤ 1,5\ β_{max} + x° \qquad\qquad (4)$$

$$0,5\ β_{max} - x° ≤ |γ2|_{max} ≤ 0,5\ β_{max} + x° \qquad\qquad (5)$$

où x° est une première valeur prescrite qui est une valeur positive inférieure ou égale à $0,5\ β_{max}$ et inférieure à 5°.

3. Cylindre pour fluide (100) selon la revendication 2, dans lequel :

le maximum de deuxième angle $β1_{max}$ et le maximum du quatrième angle $β2_{max}$ sont adaptés pour satisfaire :

$$β_{max} = y° \qquad\qquad (6)$$

où y° est une deuxième valeur prescrite située dans la gamme entre 5° et 15°.

4. Cylindre pour fluide (100) selon la revendication 3, dans lequel :

l'organe d'entraînement (60) comprend une tige de piston (60rd),

la tige de piston (60rd) comprend une première extrémité de tige (60rde1) couplée au piston (30),

la tige de piston (60rd) s'étend de la première extrémité de tige (60rde1) dans la première direction axiale (A1) et se termine à une seconde extrémité de tige (60rde2),

la seconde extrémité de tige (60rde2) est adaptée pour se déplacer le long d'une orbite fermée (Oc) de façon à amener le piston (30) à satisfaire les équations (1) à (6), l'orbite fermée (Oc) s'étendant à la fois dans la direction axiale et la direction radiale, l'orbite fermée (Oc) étant située à l'intérieur du plan de référence (PL), l'orbite fermée (Oc) a un premier point extrême (Po1) dans la première direction radiale (R1) du point de vue de l'axe du tube (a) et un deuxième point extrême (Po2) dans la deuxième direction radiale (R2) du point de vue de l'axe du tube (a), et

le maximum du deuxième angle $β1_{max}$ est formé quand la seconde extrémité de tige (60rde2) arrive au premier point extrême (Po1), alors que le maximum du quatrième angle $β2_{max}$ est formé quand la seconde extrémité de tige (60rde2) arrive au deuxième point extrême (Po2).

5. Cylindre pour fluide (100) selon la revendication 4, dans lequel :

l'organe d'entraînement (60) comprend un élément rotatif couplé à la seconde extrémité de tige (60rde2), et

l'élément rotatif est adapté pour tourner de façon à déplacer la seconde extrémité de tige (60rde2) le long de l'orbite fermée (Oc).

6. Cylindre pour fluide (100) selon la revendication 5, dans lequel :

   un centre de cercle (C) de l'orbite fermée (Oc) est arrangé sur l'axe de tube (a), et
   le premier angle $\alpha$ est supérieur à 0°.

7. Cylindre pour fluide (100) selon la revendication 5, dans lequel :
   le centre de cercle (C) de l'orbite fermée (Oc) est arrangé pour se décaler de l'axe du tube (a) dans la première direction radiale (R1).

8. Cylindre pour fluide (100) selon l'une quelconque des revendications 5 à 7, dans lequel :

   l'élément rotatif est un jeu de pignons (60rg) actionné par un moteur (60m), ou
   l'élément rotatif est une tige rotative (60rr) actionnée par un moteur (60m).

9. Cylindre pour fluide (100) selon la revendication 4, dans lequel l'élément rotatif est adapté pour former l'orbite fermée (Oc) avec une forme non-circulaire.

10. Cylindre pour fluide (100) selon l'une quelconque des revendications précédentes, dans lequel la seconde extrémité de tube (E2) est une extrémité fermée pourvue d'une soupape de sortie de fluide (Vout), la soupape de sortie de fluide (Vout) étant une soupape unidirectionnelle destinée à libérer un fluide à l'extérieur du tube cylindrique (10).

11. Cylindre pour fluide (100) selon l'une quelconque des revendications 1 à 10, le cylindre pour fluide (100) étant un cylindre pour gaz (200) et le joint étant un joint étanche aux gaz.

12. Cylindre pour fluide (100) selon l'une quelconque des revendications 1 à 11, le cylindre pour fluide (100) étant un cylindre pour gaz (200) et la soupape de sortie de fluide (Vout) étant une soupape de sortie de gaz.

13. Compresseur de gaz (1000) comprenant le cylindre à gaz (200) selon la revendication 12.

Fig. 1

**Fig. 2a**

**Fig. 2b**

**Fig. 2c**

**Fig. 2d**

**Fig. 3**

**Fig. 4**

**Fig. 5**

**Fig. 6a**

Fig. 6e

Fig. 6i

Fig. 6d

Fig. 6h

Fig. 6c

Fig. 6g

Fig. 6b

Fig. 6f

**Fig. 7a**

**Fig. 7b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1437508 A
- DE 102008031848
- FR 2752310
- JP 2001271744 B
- WO 2011106947 A